# EUROPEAN PATENT APPLICATION

(11) **EP 4 663 841 A1**
(43) Date of publication of application: **17.12.2025**
(21) Application number: 24181097.7
(22) Date of filing: 10.06.2024
(51) Int. Cl.: D06F 58/22

(54) **AIR FILTRATION UNIT, AIR FILTRATION SYSTEM, TUMBLE DRYER, AND METHOD**

(71) Applicant: BSH Hausgeräte GmbH, 81739 München (DE)
(72) Inventor: Debski, Aleksander, 93-228 Lodz (PL); Baran, Marcin, 95-080 Tuszyn (PL)

(57) **Abstract**

Filtration unit (10) for a tumble dryer: the filtration unit (10) comprising at least one filter mesh (11) at least partially comprising an electrically conductive material, wherein the filter mesh (11) is configured to be electrically grounded, and wherein the filter mesh (11) is configured to be connected to a ground pin (12) arranged on the tumble dryer.

## Description

The present invention relates to an air filtration unit, an air filtration system, a tumble dryer, and method for filtering particles in an airflow of a tumble dryer.

Tumble dryers comprise air filtration systems to remove particles, in particular lint or fluff. Such an air filtration system comprises, for example, a ventilator for creating an airflow. The path of the airflow runs through a process area of the tumble dryer and through heat exchangers. The process area is the area designated to dry laundry. The heat exchangers are designed as an evaporator and a condenser. During operation, air is being heated at the condenser. In a next step, the air runs through the process area. There, the air absorbs water from the laundry placed in the drum. Next, the now humid air is guided to the evaporator. There, the absorbed water in the air condenses and may be collected for further purposes. After that, the cycle repeats itself.

The airflow also absorbs small particles in the process area, like lint or fluff. These particles may clog the heat exchangers and reduce the efficiency of heat exchange which would lead to longer drying time. Therefore, filters are arranged in the path of the airflow, in particular, the filter elements may be arranged downstream of the process area and upstream of the heat exchanger. However, not all particles may be collected by the filter.

In view of this, it is found that a further need exists to provide an improved way to prevent clogging of the heat exchangers.

Therefore, it is an object of the present invention to provide a filtration unit for a tumble dryer, an air filtration system, a tumble dryer, and a method. Further it is an object of the present invention to provide an assembly, a tumble dryer, and a method.

According to a first aspect of the present invention, an air filtration unit for a tumble dryer is provided: the filtration unit comprising at least one filter mesh at least partially comprising an electrically conductive material, wherein the filter mesh is configured to be electrically grounded, and wherein the filter mesh is configured to be connected to a ground pin arranged on the tumble dryer.

The filtration unit is designed to be used with a tumble dryer. In other words, the filtration unit may be part of an air filtration system in a tumble dryer. The filtration unit comprises at least one filter mesh. The filter mesh may be part of a filter element. The filter mesh may comprise a net structure or a fabric. The filter mesh allows particles to be filtered out of an airflow.

The filter mesh is configured to be electrically grounded. In other words, the filter mesh is configured or designed to have no electrical charge or to have a neutral electrical charge. For this, the filter mesh is configured to be connected to a ground pin. By doing so, the filter mesh may be grounded in an installed state. That way, the filter mesh may have no charge or a neutral charge. The ground pin on the tumble dryer may be any constructive feature or structural element, that may allow to ground the filter mesh by connecting the filter mesh with the ground pin. That means, that the ground pin does not have to be a pin, but may be designed as another suitable connection, for example, a plug-socket assembly.

By grounding the filter mesh, the filter mesh is not electrically charged. However, the particles to be filtered are charged, in particular are positively charged. When the charged particles travel through the filtration unit, the potential difference between the particles and the grounded filter mesh will cause the particles to stick to the filter mesh because of electrostatic adhesion.

As a result, it is possible for more particles to settle on the filter mesh, while maintaining the same mesh density. This allows for a better filter efficiency. Additionally, the particles that pass through the filter mesh will have a neutral charge. Hence, these particles may not stick to the heat exchangers due to a potential difference, since the heat exchangers may be grounded.

In an embodiment, the filtration unit comprises two filter meshes arranged in series, wherein at least one of the two filter meshes is designed to be electrically grounded. Each filter mesh may be part of a separate filter element. Preferably, each filter mesh is electrically grounded. That way, a high filtration efficiency may be achieved.

In an embodiment, the tumble dryer has a process area, which is configured to receive laundry to be dried, wherein the filter mesh of the filtration unit is configured to be arranged directly after the process area has a lower mesh density than the other filter mesh. This allows the filtration unit to perform a first filtration step and a second filtration step. In the first filtration step, larger particles may be filtered out of the airflow. In the second filtration step, smaller particles may be filtered out of the airflow.

In an embodiment, the filter mesh is configured to be grounded by an electrically conductive connection to a front element of the tumble dryer, in particular a lagershield. The lagershield is part of the tumble dryer and a rather large component. The lagershield usually is made of an electrically conductive material and therefore well suited to be used to ground the filter mesh.

In an embodiment, the filter mesh comprises stainless steel or polyester fibers with active carbon. These materials are particularly easy to process into a filter mesh and offer sufficient electrical conductivity to ground the filter mesh. Further suitable materials may also be used for the filter mesh.

In an embodiment, the filtration unit is configured to be arranged upstream of a heat exchanger, in particular an evaporator. That way, the airflow may be filtered before running through the heat exchanger. Preferably, the filtration unit may be arranged directly after the process area, for example, a dryer drum. Then the components downstream in the airflow may be prevented from clogging.

In an embodiment, the filter unit is at least partially wedge-shaped. The wedge shape allows for a large filtration area and to collect a large number of particles or filtered material. The filtration unit may comprise two filter elements, wherein one filter element extends at least partially into the second filter element. In this way, the filter unit may have a compact design.

According to a further aspect of the present invention, an air filtration system for a tumble dryer is provided, comprising a ventilator for creating an airflow; at least one filtration unit according to any one of the preceding embodiments, which is configured to be arranged in the airflow, in particular downstream of a process area of the tumble dryer, and at least one ground pin, which is configured to electrically connect the filter mesh with the tumble dryer.

According to a further aspect of the present invention, a tumble dryer comprising an air filtration unit or an air filtration system is provided according to any one of the preceding embodiments.

According to a further aspect of the present invention, a method for filtering an air flow in a tumble dryer is provided, in particular with an air filtration unit or an air filtration system according to any one of the preceding embodiments, comprising the following steps: creating an air flow through a process area of the tumble dryer; guiding the air flow through a filtration unit with at least one grounded filter mesh arranged downstream of the process area; and filtering particles out of the air stream by electrostatic adhesion.

These and other objects, which become apparent upon reading the following description, are solved by the subject matter of the independent claims. The dependent claims refer to preferred embodiments of the invention.

In the following, the present disclosure is described exemplarily concerning the enclosed figures, in which
- **Figure 1**: a schematic view of a filtration unit according to a present invention in a tumble dryer;
- **Figure 2**: a schematic view of a filter mesh of a filtration unit according to the present invention; and
- **Figure 3**: a schematic view of a method for filtering an airflow in a tumble dryer.

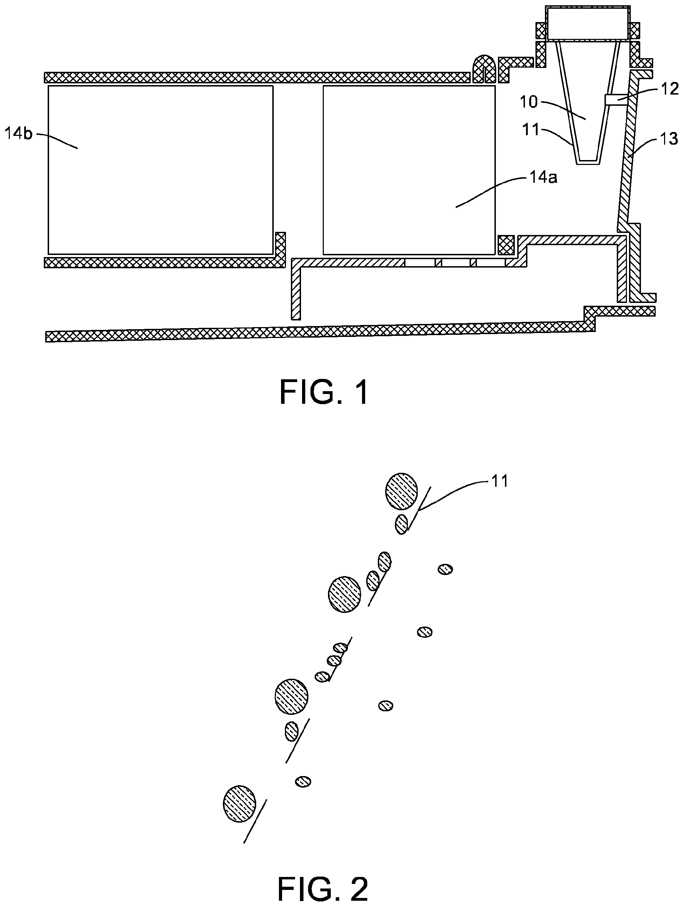

Figure 1 shows a filtration system in a tumble dryer. Figure 1 shows part of the tumble dryer. In particular, Figure 1 shows the path or cycle of an airflow through the tumble dryer. Starting from a process area, the airflow travels through a filtration unit 10. Next, the airflow passes through the heat exchangers 14. First, the airflow passes through an evaporator 14a. The airflow is cooled down at the evaporator 14a. That means, the water condenses. Next, the airflow passes through a condenser 14b. The airflow is then being heated at the condenser 14b. That way, the airflow can absorb more water in the process area. After that, the cycle repeats itself. Together with the absorbed water, the airflow also transports particles, in particular fluff or lint. These particles are to be collected in the filtration unit 10. Without the filtration unit 10, the heat exchangers 14 would be clogged by the particles.

The filtration unit 10 is substantially wedge shaped. That means the filtration unit 10 narrows in the direction of the airflow. The filtration unit 10 comprises a substantial rectangle inlet portion. The inlet portion may be described as a base of the wedge-shape of the filtration unit. The filtration unit 10 has two substantially trapezoidal planes and two substantially triangular planes. The trapezoidal planes of the filtration unit 10 comprise the filter mesh 11. The filter mesh 11 is designed to filter particles out of the airflow, in particular fluff and lint.

The filtration efficiency of the filtration unit 10 depends mainly of the mesh density of the filter mesh 11. A dense filter mesh 11 results in a better filtration efficiency but results also in greater airflow resistance. The airflow resistance might affect the performance of the tumble dryer. A lower mesh density results in a lower airflow resistance. However, this comes with a lower filtration efficiency. That means, more particles may pass through the filter mesh 11.

The filter mesh 11 comprises an electrically conductive material. The filter mesh 11 may be at least partially made of an electrically conductive material, for example, stainless steel and/or polyester fibers with active carbon. The filter mesh 11 of the filtration unit shown in Figure 1 is connected to a ground pin 12. The ground pin is arranged at a front element 13. The front element 13 may, for example, be a lagershield. By connecting the filter mesh 11 via the ground pin 12 to the front element 13, the filter mesh is electrically grounded. By grounding the filter mesh 11, the filter mesh 11 discharges its electrical potential or electrical charge. In other words, during operation, the filter mesh 11 is not electrically charged.

During a drying process, the particles to be filtered have an electrical potential, in particular, the particles to be filtered have a positive charge. When the charged particles travel through the filtration unit 10, the potential difference between the particles and the grounded filter mesh 11 will cause the particles to stick to the filter mesh 11 because of electrostatic adhesion. So as a result, by grounding the filter mesh 11, it is possible for more particles to settle on the filter mesh 11 while maintaining the same mesh density. That means a better filtration efficiency is achieved with a lower mesh density.

Figure 2 shows a schematic view of a filter mesh 11 that is grounded. The direction of the airflow is indicated by an arrow. As illustrated, large and small particles carried by the airflow stick to the filter mesh 11. The large particles stick to the filter mesh 11 because the larger particles are too big to pass through the filter mesh 11. However, even a number of smaller particles stick to the filter mesh, although the smaller particles may pass the filter mesh. However, since the filter mesh is grounded and the smaller particles have an electrical charge, the smaller particles may stick to the filter mesh 11. Furthermore, the particles that still pass through the filter mesh 11 have a neutral charge or discharge their electrical charge via the filter mesh 11 and the ground pin 12. That means, these particles do not stick to the heat exchangers due to a potential difference, since the heat exchangers are preferably grounded and therefore have a neutral charge.

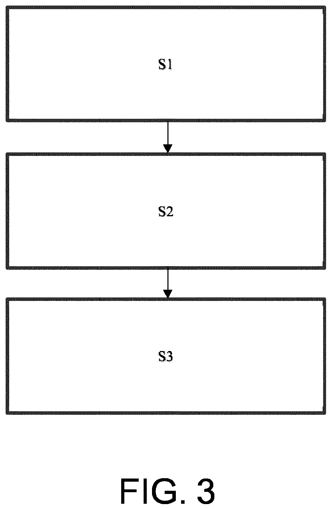

Figure 3 shows a schematic view of a method for filtering the airflow of a tumble dryer. In a first step S1, an airflow through a process area of the tumble dryer is created. The airflow may be created by a ventilator. The airflow may be a steady airflow or a variable airflow

In a second step S2, the air flow is guided through a filtration unit 10 with at least one grounded filter mesh 11 arranged downstream of the process area. The process area is in a drum of the tumble dryer. The process area is the area, where laundry and/or clothes are dried.

In a third step S3, the particles are filtered out of the airflow by electrostatic adhesion. The electrostatic adhesion is a result of the charged particles and the grounded filter mesh and the potential difference between these.

The present disclosure has been described in conjunction with a preferred embodiment as examples as well. However, other variations can be understood and effected by those persons skilled in the art and practicing the claimed invention, from the studies of the drawings, this disclosure, and the claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### Reference signs

- 10: filtration unit
- 11: filter mesh
- 12: ground pin
- 13: front element
- 14: heat exchanger
- 14a: evaporator
- 14b: condenser

## Claims

1. Filtration unit (10) for a tumble dryer:
- the filtration unit (10) comprising at least one filter mesh (11) at least partially comprising an electrically conductive material, wherein the filter mesh (11) is configured to be electrically grounded, and wherein the filter mesh (11) is configured to be connected to a ground pin (12) arranged on the tumble dryer.

2. Filtration unit (10) according to claim 1, wherein the filtration unit (10) comprises two filter meshes (11) arranged in series, wherein at least one of the two filter meshes (11) is designed to be electrically grounded.

3. Filtration unit (10) according to claim 2, wherein the tumble dryer has a process area, which is configured to receive laundry to be dried, wherein the filter mesh (11) of the filtration unit (10) configured to be arranged directly after the process area has a lower mesh density than the other filter mesh (11).

4. Filtration unit (10) according to any one of the preceding claims, wherein the filter mesh (11) is configured to be grounded by an electrically conductive connection to a front element (13) of the tumble dryer, in particular a lagershield.

5. Filtration unit (10) according to any one of the preceding claims, wherein the filter mesh comprises stainless steel or polyester fibers with active carbon.

6. Filtration unit (10) according to any one of the preceding claims, wherein the filtration unit (10) is configured to be arranged in upstream of a heat exchanger (14), in particular an evaporator.

7. Filtration unit (10) according to any one of the preceding claims, wherein the filtration unit (10) is at least partially wedge-shaped.

8. Filtration system for a for a tumble dryer, comprising
- a ventilator for creating an airflow;
- at least one filtration unit (10) according to any one of the claims 1 to 7, which is configured to be arranged in the airflow, in particular downstream of a process area of the tumble dryer, and
- at least one ground pin (12), which is configured to electrically connect the filter mesh with the tumble dryer.

9. Tumble dryer comprising an air filtration unit (10) or an air filtration system according to any one of the preceding claims.

10. Method for filtering an air flow in a tumble dryer, in particular with an air filtration unit according to any one of the claims 1 to 7 or an air filtration system according to claim 8, comprising the following steps:
- creating an airflow through a process area of the tumble dryer;
- guiding the air flow through a filtration unit (10) with at least one grounded filter mesh (11) arranged downstream of the process area; and
- filtering particles out of the airflow by electro static adhesion.
